# NEUE EUROPÄISCHE PATENTSCHRIFT

(11) **EP 0 419 707 B2**
(45) Veröffentlichungstag und Bekanntmachung des Hinweises auf die Entscheidung über den Einspruch: **20.08.1997**
(45) Hinweis auf die Patenterteilung: 19.05.1993
(21) Anmeldenummer: 89117939.2
(22) Anmeldetag: 28.09.1989
(51) Int. Cl.: B60H 1/00

(54) **Heiz- bzw. Klimagerät, insbesondere für ein Kraftfahrzeug, mit luftseitiger Temperatureinstellung**
Heating or air conditioning apparatus, particularly for a motor vehicle, using air mixture temperature control
Appareil de chauffage ou de climatisation, particulièrement pour un véhicule automobile, avec régulation de la température de ventilation

(43) Veröffentlichungstag der Anmeldung: 03.04.1991
(73) Patentinhaber: Valeo Klimasysteme GmbH, 96476 Rodach (DE)
(72) Erfinder: Hartleb, Thomas, Dipl.-Ing.(FH), D-8631 Meeder (DE); Hildebrand, Reinhard, D-8627 Redwitz (DE)
(74) Vertreter: COHAUSZ HASE DAWIDOWICZ & PARTNER

(56) Entgegenhaltungen:
- EP-A- 0 216 104
- DE-A- 3 526 518
- DE-C- 2 615 476
- FR-A- 1 301 200
- FR-A- 2 608 525
- JP-A-52 038 287
- US-A- 4 488 409
- US-A- 4 570 450
- US-A- 4 586 652
- DE-Zeitschrift "ATZ" 1988, Heft 3(Sonderdruck), Seite 4, Bild 6 u. 7
- DE-Zeitschrift "mot" 1987, Heft 15, Seiten 84-92

## Beschreibung

Die Erfindung bezieht sich auf ein Heiz- bzw. Klimagerät, insbesondere für ein Kraftfahrzeug, mit luftseitiger Temperatureinstellung gemäß Oberbegriff des Anspruchs 1; ein derartiges Heiz- bzw. Klimagerät ist aus der US-A-4 586 652 bekannt.

Bei der bekannten Anlage ist ein erster Hauptmischraum mit ausgangsseitigen Düsen für den Vorderteil des Fahrzeuges und ein Nebenmischraum vor einem Nebenventilator vorgesehen, der je nach Stellung von nur dem Hinterteil des Fahrzeuges zugeordneten Mischluftklappen mehr oder weniger Kaltluft vor dem Wärmetauscher bzw. erwärmte Luft aus dem Hauptmischraum abgesaugt und zu Düsen im Hinterteil des Fahrzeuges bläst; als Temperatur-Istwertmelder sind ein Sensor im Fahrzeuginnenraum und im Ausblasbereich hinter dem Nebenventilator vorgesehen.

Bei herkömmlichen, z.B. manuell angesteuerten und gegebenenfalls durch eine Temperatur-Istwerterfasung im Fahrzeuginnenraum nachgeregelten Heiz- bzw. Klimageräten kann sich die Ausblastemperatur bei einer vorgegebenen Einstellung einer Temperatur, z.B. an einem Bediengerät am Armaturenbrett des Kraftfahrzeuges, bis zu 20 °C in Abhängigkeit vom betrieblich sich ändernden Wasserdurchsatz durch den Wärmetauscher aufgrund z.B. unterschiedlicher Motordrehzahl sowie der Temperatur und Menge der angesaugten Luft, z.B. aufgrund unterschiedlicher eingangsseitiger Druckverhältnisse, variieren; diese starken Temperaturschwankungen führen zu erheblichen Komfortverschlechterungen für die Fahrzeuginsassen im Innenraum des Kraftfahrzeuges.

Erfindungsgemäß kann bei einem luftseitig gesteuerten Heiz- bzw. Klimagerät der eingangs genannten Art mit einfachen Mitteln eine Komfortverbesserung für die Fahrzeuginsassen durch weitgehende Unabhängigkeit der vorgegebenen bzw. eingestellten Temperatur von unterschiedlichen Wasserdurchsätzen im Wärmetauscher bzw. Temperatur - oder Mengenänderungen der angesaugten Luft durch die Lehre des Anspruchs 1 erreicht werden.

Erfindungsgemäß ist es möglich, mit geringem elektronischen Regelaufwand auf z.B. unterschiedliche Wärmetauscherdurchflußmengen schnell zu reagieren und durch Veränderung der Mischluftklappenstellung auszuregeln; es kann somit eine Störung der Fahrzeuginsassen über die mit der Mischluftklappensteuerung vorgewählte Ausblastemperatur aufgrund direkterer und sicherer Messung einer Veränderung der Wärmetauscherleistung durch Nachstellen der Mischluftklappe kompensiert werden. Durch eine Abhängigkeit der Korrekturgröße von der vorgewählten Mischluftklappenstellung kann in vorteilhafter Weise der Eingriffsgrad der Korrekturgröße an den jeweiligen Warmluftanteil und somit an die durch diesen bei unterschiedlichen Wärmetauscherdurchflußmengen bedingten Regelabweichungen angepaßt werden.

Die Erfindung wird im folgenden anhand eines schematisch dargestellten Ausführungsbeispiels in der Zeichnung näher erläutert; darin zeigen:
- FIG 1: in einem Schnitt den konstruktiven Aufbau eines Heiz- bzw. Klimagerätes,
- FIG 2: das Schaltungsprinzip zur Ansteuerung des Stellantriebs für die Mischluftklappe in Abhängigkeit von einem Ausblastemperatur-Sensor bzw. einem Wärmetauschertemperatur-Sensor.

In einem Kunststoffgehäuse wird von einem eingangsseitigen Ventilator VE Frisch- bzw. Umluft einem dem Ventilator VE nachgeschalteten Verdampfer VD zugeführt; der aus dem Verdampfer VD ausströmende Kaltluftstrom gelangt je nach Stellung einer ersten Mischluftklappe MKI bzw. einer zweiten Mischluftklappe MKII als direkter Kaltluftstrom oder als durch einen Wärmetauscher WT erwärmter Warmluftstrom in bestimmtem Mischungsverhältnis in einen Mischraum MR und von dort je nach eingestellter Luftverteilung mit möglichen Zwischenstellungen zu Fußraumdüsen DF, zu Defrosterdüsen DEF, zu Mitteldüsen DM und Seitendüsen DS.

Nach der erfindungsgemäßen Lösung ist ein Wärmetauschertemperatur - Sensor SII unmittelbar hinter dem Wärmetauscher WT angeordnet, der die jeweilige augenblickliche Temperatur des aus dem Wärmetauscher WT austretenden erwärmten Luftstromes erfaßt.

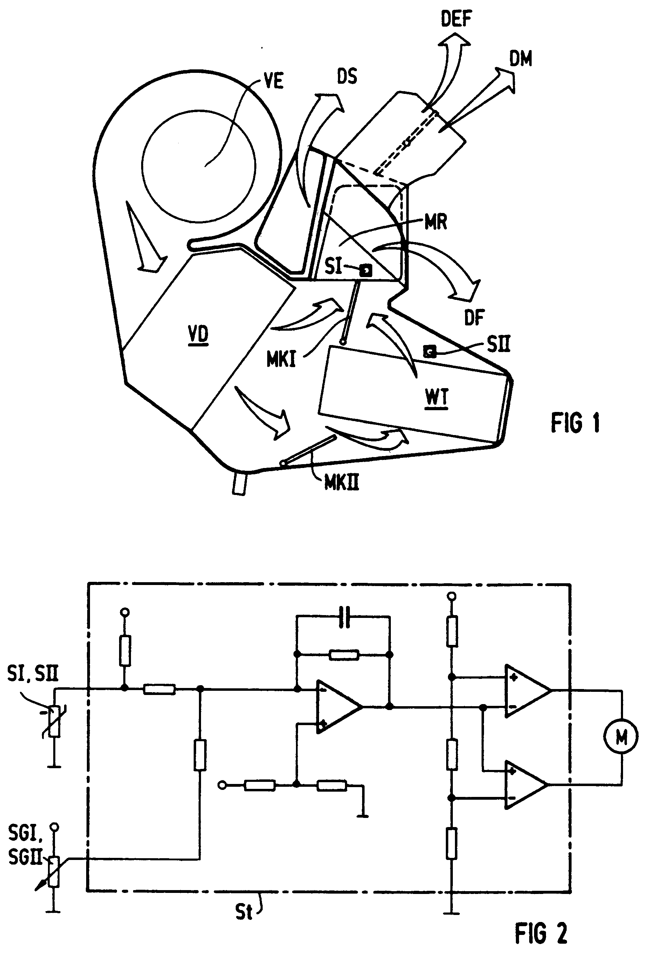

Die Sollwerte der Sollwertgeber SGI für eine bestimmte Ausblastemperatur bzw. SGII für eine bestimmte Stellung der Mischluftklappen MKI bzw.MKII sind als Eingangswerte einer in FIG 2 schematisch dargestellten, zumindest einen PD-Regler und eine Treiberstufe enthaltenden elektronischen Steuervorrichtung St angeschlossen, über die ein Stellmotor M für die beiden, in der Regel mechanisch miteinander gekoppelten Mischluftklappen MKI und MKII gemäß der erfinderischen Lehre verstellt wird.

## Patentansprüche

1. Heiz- bzw. Klimagerät, insbesondere für ein Kraftfahrzeug, mit luftseitiger Temperatureinstellung mittels zumindest einer Mischluftklappe (MKI bzw.MKII) in einem Mischraum (MR), in den ein direkter Kaltluftstrom und ein nach Durchströmen eines Wärmetauschers (WT) erwärmter Warmluftstrom mit je nach Stellung der Mischluftklappe (MKI bzw.MKII) unterschiedlichem Mischungsverhältnis eintreten und über gegebenenfalls mehrere Luftkanäle (DF;DM;DEF;DS) in den Fahrgast-Innenraum des Kraftfahrzeuges mit entsprechender Ausblastemperatuf austreten, wobei die Mischluftklappe (MKI bzw. MKII) über eine Steuervorrichtung (St) in Verstellabhängigkeit von einem vorgebbaren Temperatur-Sollwert (SGII) und einem einen jeweiligen Temperatur-Istwert erfassenden Temperatur-Sensor steht, **dadurch gekennzeichnet,** daß die Mischluftklappe (MKI bzw.MKII) über die Steuervorrichtung (St) in Abhängigkeit von einer durch den Temperatur-Istwert eines Wärmetauscher-Sensors (SII) im Wärmetauscher (WT) bzw. unmittelbar hinter dem Wärmetauscher (WT) bestimmten Korrekturgröße verstellbar und dabei eine mischluftklappenstellungsabhängige Wichtung der Korrekturgröße im Sinne eines maximalen Einflusses bei maximaler Warmluftzufuhr bzw. eines minimalen Einflusses bei maximaler Kaltluftzufuhr in den Mischraum vorgesehen ist.

## Claims

1. Heating and air-conditioning device, in particular for a motor vehicle, with downstream temperature adjustment by means of at least one secondary-air valve (MKI and MKII) in a mixture chamber (MR) into which there enter a direct stream of cold air and a stream of warm air heated after flowing through a heat exchanger (WT), with a mixture ratio which differs in each case according to the position of the secondary-air valve (MKI and MKII), the air stream exiting by way of perhaps several air ducts (DF;DM;DEF;DS) into the passenger interior of the motor vehicle with appropriate emission temperature, whereby the secondary-air valve (MKI and MKII) is dependent in terms of adjustment by way of a control device (St) on a specifiable desired temperature value (SGII) and a temperature sensor detecting a corresponding actual temperature value, characterized in that the secondary-air valve (MKI and MKII) can be adjusted by way of the control device (St) in dependence upon a correction variable determined by the actual temperature value of a heat-exchanger sensor (SII) in the heat exchanger (WT) and directly after the heat exchanger (WT) and by a weighting of the correction variable dependent upon the position of the secondary-air valve in the sense of a maximum influence with maximum supply of warm air or a minimum influence with maximum supply of cold air into the mixture chamber.

## Revendications

1. Installation de chauffage ou de climatisation, notamment pour un véhicule automobile, comportant un réglage de la température, côté air, à l'aide d'au moins un volet (MKI ou MKII) pour le mélange d'air mélangé dans une chambre de mélange (MR), dans laquelle un courant direct d'air froid et un courant d'air chaud, chauffé après son passage dans un échangeur de chaleur (WT), entrent avec un rapport de mélange différent en fonction de la position du volet (MKI ou MKII) pour le mélange d'air et sortent en passant éventuellement par plusieurs canaux pour l'air (DF;DM;DEF;DS) dans l'habitacle du véhicule automobile en ayant une température de sortie adéquate, et dans laquelle le déplacement du volet (MKI ou MKII) pour le mélange d'air dépend, par l'intermédiaire d'un dispositif de commande (St), d'une valeur de consigne (SGII) de la température, pouvant être prescrite, et, d'un capteur de température détectant la valeur réelle de la température, caractérisée par le fait que le volet (MKI ou MKII) pour le mélange d'air peut être déplacé, par l'intermédiaire du dispositif de commande (St), en fonction d'une grandeur de correction, qui est déterminée par la valeur réelle de la température d'un capteur (SII) situé dans l'échangeur de chaleur (WT) ou immédiatement en aval de l'échangeur de chaleur (WT) et une pondération, qui est fonction de la position du volet pour le mélange d'air, de la grandeur de correction en vue d'obtenir une influence maximale dans le cas d'un apport maximum d'air chaud ou une influence minimale dans le cas d'un apport maximum d'air froid dans la chambre de mélange.
